# EUROPEAN PATENT APPLICATION

(11) **EP 2 854 085 A1**
(43) Date of publication of application: **01.04.2015**
(21) Application number: 14186192.2
(22) Date of filing: 24.09.2014
(51) Int. Cl.: G06Q 10/10

(54) **Methods and systems for information distribution**

(30) Priority: 27.09.2013 TW 102134944
(71) Applicant: Zappoint Corporation, Taipei City 115 (TW)
(72) Inventor: Wang, John C., Taoyuan 330 (TW)
(74) Representative: Müller-Boré & Partner Patentanwälte PartG mbB

(57) **Abstract**

Methods and systems for information distribution are provided. First, first ID (420) is obtained from a data carrier (410). The first ID (420) and second ID are transmitted to a management center (120) via a network (130), wherein the management center (120) determines a specific subset of first data corresponding to the first ID (420) according to the first ID (420) and the second ID. Then, the specific subset of the first data is received from the management center (120) via the network (130), and the specific subset of the first data is output.

## Description

### BACKGROUND

### Technical Field

The disclosure relates generally to methods and systems for information distribution, and, more particularly to methods and systems that can perform information distributions with different information for different entities.

### Description of the Related Art

Recently, portable devices, such as smart phones or notebooks, have become more and more technically advanced and multifunctional. For example, a portable device may have network connecting capabilities. Users can use their portable devices to connect to networks anytime and anywhere. For the convenience and newly functionalities advanced by modem technology, these devices have become necessities of life.

Traditionally, information exchange between persons is performed by exchanging business cards. Each person can design their own business card and print the information that they wish to share on the card. Generally, a small and limited space is available on a business card so that the information which can be provided on the business card is limited. Usually only basic background information or simple ways of contact can be printed on a business card. If a receiver of a business card wishes to know more information about the owner of the business card, they may obtain it via ways of contact printed on the business card. Since these actions require manual and further operations, the desire for obtaining further information is greatly diminished for users.

Furthermore, each person typically only has one standard business card. All recipients of the business card obtain the same information from the business card regardless of the relationship between the respective recipient and the owner of the business card. For example, the information obtained from the business card by clients, friends, and families of the owner of the business card is exactly the same. If information distribution with various levels of detail is desired, the owner must create several different versions of their business card. It is inconvenient, costly and hard to manage for the owner of the business card to have several types of business cards.

Furthermore, the information printed on a business card is fixed. In other words, once a business card is produced, the information on the business card cannot be changed anymore. Even if a single piece of information on the business card changes, such as job function, phone number, or email address, the user must re-produce his new business card. This again accrues additional costs and inconvenience for the business card holder. Furthermore, people who previously received the now outdated business card do not have the updated information.

### SUMMARY

Methods and systems for information distribution are provided.

In an embodiment of a method for information distribution, first identity data (ID) is obtained from a data carrier. The first ID and second ID are transmitted to a management center via a network, wherein the management center determines a specific subset of first data corresponding to the first ID according to the first ID and the second ID. Then, the specific subset of the first data is received from the management center via the network, and the specific subset of the first data is output.

An embodiment of a system for information distribution comprises an identity data obtaining unit, a network connecting unit, and a processing unit. The identity data obtaining unit obtains first ID from a data carrier. The processing unit transmits the first ID and second ID to a management center via a network by using the network connecting unit, wherein the management center determines a specific subset of first data corresponding to the first ID according to the first ID and the second ID. The processing unit receives the specific subset of the first data from the management center via the network by using the network connecting unit, and outputs the specific subset of the first data.

In some embodiments, the electronic device captures an image for the data carrier by using an image capture unit, and obtains the first ID from the image.

In some embodiments, the electronic device scans the data carrier by using a scanner to obtain the first ID from the data carrier.

In some embodiments, the electronic device wirelessly detects and obtains the first ID from the data carrier by using a reader.

In some embodiments, the electronic device provides a user interface for inputting the second ID to the electronic device.

In some embodiments, an image is displayed via a display unit, and the specific subset of the first data is displayed in the image using an AR (Augmented Reality) technology.

In some embodiments, the specific subset of the first data can be output via a speaker unit.

In some embodiments, the management center retrieves an information distribution authority for the second ID corresponding to the first ID, and determines the specific subset of the first Data corresponding to the first ID according to the information distribution authority.

In some embodiments, an information request for the first ID, which is generated by the second ID can be transmitted to the management canter via the network. The management center notifies the information request of the second ID to an entity corresponding to the first ID. In some embodiments, the management center can further receive an instruction for modifying the information distribution authority for the second ID corresponding to the first ID according to the information request, in which the instruction is generated, in response to the notification, by the entity corresponding to the first ID.

In some embodiments, an information granting instruction for the first ID, which is generated by the second ID can be transmitted to the management canter via the network. The management center notifies the information granting instruction of the second ID to an entity corresponding to the first ID. In some embodiments, the management center can receive an acceptance instruction, which is generated, in response to the notification, by the entity corresponding to the first ID.

In some embodiments, an entity corresponding to third ID can receive the specific subset of the first data corresponding to the first ID from the management center via the network by way of an entity corresponding to the second ID.

In some embodiments, the management center can obtain additional data according to the second ID, and determine the specific subset of the first data corresponding to the first ID according to the first ID, the second ID, and the additional data.

The effect of the methods and systems for information distribution of the present invention can perform information distributions with different authorities for different entities.

Methods for information distribution may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for information distribution of the invention;
Fig. 2 is a schematic diagram illustrating an embodiment of an electronic device of the invention;
Fig. 3 is a flowchart of an embodiment of a method for information distribution of the invention;
Fig. 4 is a schematic diagram illustrating a business card on a table;
Fig. 5 is a schematic diagram illustrating an example of information distribution of the invention;
Fig. 6 is a schematic diagram illustrating another example of information distribution of the invention;
Fig. 7 is a flowchart of an embodiment of a management method for information distribution of the invention; and
Fig. 8 is a flowchart of another embodiment of a management method for information distribution of the invention.

### DETAILED DESCRIPTION OF THE INVENTION

Methods and systems for information distribution are provided.

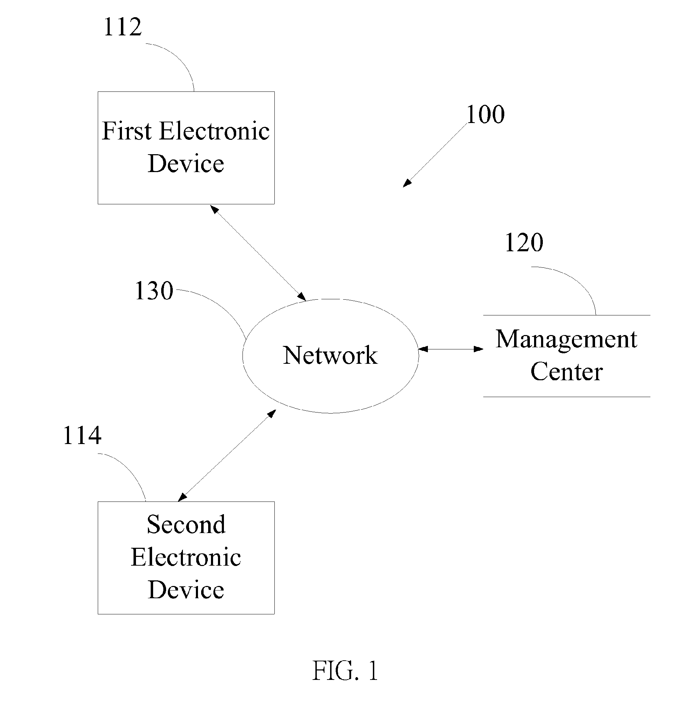

Fig. 1 is a schematic diagram illustrating an embodiment of a system for information distribution of the invention. As shown in Fig. 1, the system for information distribution 100 can comprise at least one electronic device, such as a first electronic device 112 or a second electronic device 114, and a management center 120. It is noted that, the electronic device may be any electronic device having network connecting capabilities, such as a computer, or a mobile device, such as a mobile phone, a smart phone, a PDA (Personal Digital Assistant), a GPS (Global Positioning System), a camera, or a notebook. The electronic device can couple to the management center 120 via a network 130, such as a wired network, a telecommunication network, and/or a wireless network, such as a Wi-Fi network, and perform the methods for information distribution of the present invention, which will be discussed further in the following paragraphs. The management center 120 can store data, such as personal information and business information, which is expected to be distributed by respective entities, such as persons, groups, and business organizations, in which each entity has corresponding identity data. It is understood that, the respective entity has a hierarchical information distribution authority. That is, a specific information distribution authority is provided between entities. Each entity can login to the management center to edit data to be distributed, and data items and/or contents that can be distributed for the respective information distribution authorities in different levels. In other words, the respective information distribution authority can correspond to a specific subset of the entire data for distribution. For example, the entire data for distribution has 10 data items, the specific subset for a first information distribution authority may have 3 data items among the 10 data items, the specific subset for a second information distribution authority may have 5 data items among the 10 data items, the specific subset for a third information distribution authority may have 7 data items among the 10 data items, and the specific subset for a fourth information distribution authority may have 10 data items among the 10 data items. It is noted that, the information distribution authority between entities can be adjusted/changed.

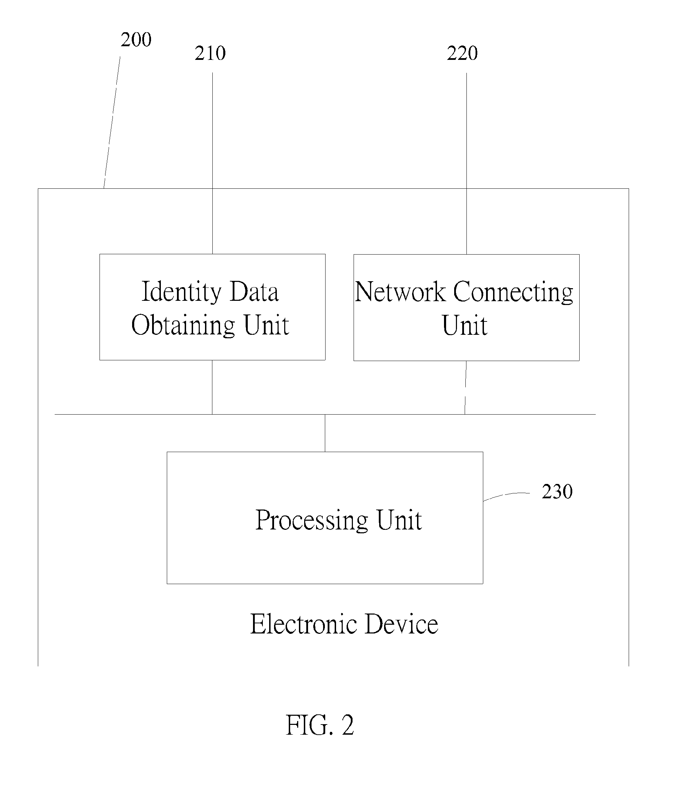

Fig. 2 is a schematic diagram illustrating an embodiment of an electronic device of the invention. As described, the electronic device 200 may be any electronic device having network connecting capabilities, such as a computer, or a mobile device, such as a mobile phone, a smart phone, a PDA, a GPS, a camera or a notebook. The electronic device 200 at least comprises an identity data obtaining unit 210, a network connecting unit 220, and a processing unit 230. The identity data obtaining unit 210 can obtain identity data from a data carrier. In some embodiments, the data carrier may comprise a business card, a publication, a screen, and/or any medium which can store or be printed with the identity data. In some embodiments, the identity data may be a sequence of numbers, a sequence of characters, and/or a sequence of combination of numbers and characters, such as a name, a phone number, an email address, an email signature, a website address, an advertisement, a post, and/or member identification. It is understood that, in some embodiments, the identity data obtaining unit 210 may be an optical detecting unit. For example, the identity data obtaining unit 210 may be an image capture unit for capturing an image for the data carrier, and obtaining the identity data from the image. It is noted that, the image capture unit may be a CCD (Charge Coupled Device) or a CMOS (Complementary Metal-Oxide Semiconductor), placed at the imaging position for objects inside the user device. In another example, the identity data obtaining unit 210 may be a scanner for scanning the data carrier, thus to obtain the identity data from the data carrier. In some embodiments, the identity data obtaining unit 210 may be a wireless detecting unit. For example, the identity data obtaining unit 210 may be a reader, such as a reader based on RFID, Bluetooth, or Wi-Fi technology, which wirelessly detects the identity data from the data carrier. It is understood that, the above identity data obtaining units are only examples of the application, and the present invention is not limited thereto. Any unit which can be used to obtain the identity data can be applied in the present invention. The network connecting unit 220 can connect to the network 130, such as a wired network, a telecommunication network, and/or a wireless network. The electronic device 200 can have network connecting capabilities by using the network connecting unit 220. The processing unit 230 can control related operations of hardware and software in the electronic device 200.

It is understood that, in some embodiments, the electronic device 200 may have a display unit (not shown in Fig. 2), which can display related data, such as images captured by the image capture unit, interfaces, and/or data. It is understood that, in some embodiments, the electronic device 200 may have an AR (Augmented Reality) technology. The electronic device 200 can display an image currently captured by the image capture unit and the distributed information received from the management center 120 via the display unit by using the AR technology. Furthermore, in some embodiments, the electronic device 200 can have a storage unit (not shown in Fig. 2). The storage unit can store related data, such as distributed information received from the management center 120, and/or identity data corresponding to the electronic device 200 itself. It is noted that, in some embodiments, the electronic device 200 can provide a user interface for inputting the identity data to the electronic device 200. Further, in some embodiments, the electronic device 200 may have a speaker unit (not shown in Fig. 2), which can generate sounds/voices. Additionally, in some embodiments, the electronic device 200 can download an application from the management center 120 and/or an application store. The application can be installed in the electronic device 200, thus to help the electronic device 200 to obtain identity data, upload the identity data to the management center 120, and receive distributed information from the management center 120.

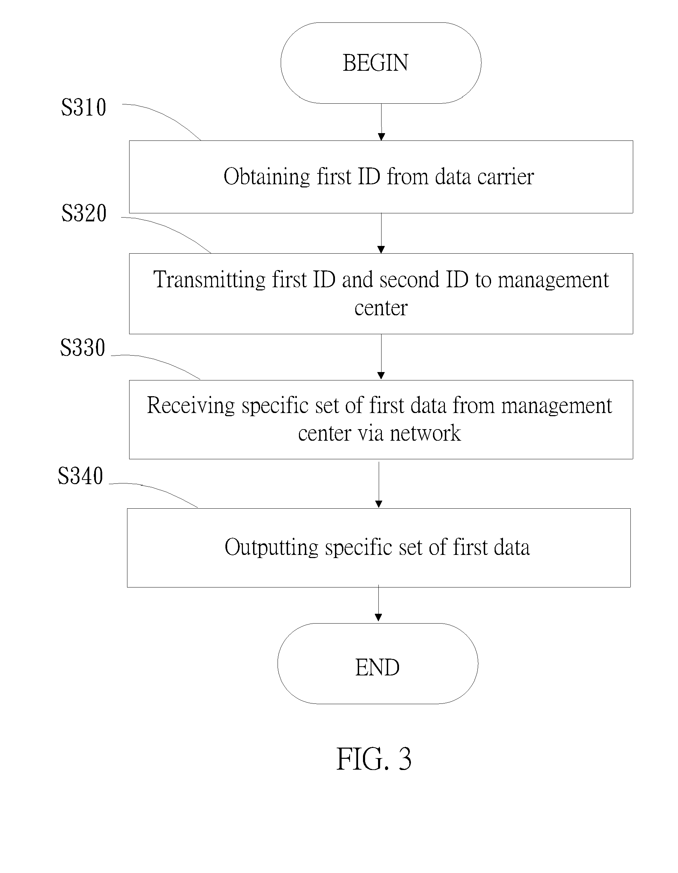

Fig. 3 is a flowchart of an embodiment of a method for information distribution of the invention. The method for information distribution can be used in an electronic device having network connecting capabilities, such as a computer, or a mobile device, such as a mobile phone, a smart phone, a PDA, a GPS, a camera, or a notebook.

In step S310, first identity data (ID) is obtained from a data carrier. It is noted that, the electronic device has second ID. In some embodiments, the electronic device can provide a user interface for inputting the second ID to the electronic device. It is understood that, in some embodiments, the electronic device can capture an image for the data carrier by using an image capture unit, and obtain the first ID from the image. In some embodiments, the electronic device can scan the data carrier by using a scanner, thus to obtain the first ID from the data carrier. Additionally, in some embodiments, the electronic device can wirelessly detect and obtain the first ID from the data carrier by using a reader. Similarly, above ways to obtain the identity data are only examples of the application, and the present invention is not limited thereto. It is noted that, in some embodiments, the data carrier may comprise a business card, a publication, a screen, and/or any medium which can store or be printed with the identity data. In some embodiments, the identity data may be a sequence of numbers, a sequence of characters, and/or a sequence of combination of numbers and characters, such as a name, a phone number, an email address, an email signature, a website address, an advertisement, a post, and/or member identification. After the first ID is obtained, in step S320, the first ID and the second ID are transmitted to a management center via a network. It is noted that, as described, after the identity data is obtained, the application installed in the electronic device can automatically transmit the obtained first ID and the second ID of the electronic device to the management center. It is understood that, the management center can determine a specific subset of first data corresponding to the first ID according to the first ID and the second ID. As described, the management center can record the information distribution authority between entities. In some embodiments, the management center can retrieve an information distribution authority for the second ID corresponding to the first ID, and determine the specific subset of the first data corresponding to the first ID according to the information distribution authority. Then, in step S330, the specific subset of the first data is received from the management center via the network, and in step S340, the specific subset of the first data is output. It is understood that, in some embodiments, the specific subset of the first data can be displayed via a display unit. In some embodiments, the specific subset of the first data can be displayed via a display unit by using an AR technology. In some embodiments, when the first ID is obtained from the image captured by the image capture unit, the display unit of the electronic device can display the captured image, and display the specific subset of the first data in the image by using the AR technology. Additionally, in some embodiments, the specific subset of the first data can be output via a speaker unit. It is noted that, the above ways for outputting the specific subset of the first data are only examples of the application, and the present invention is not limited thereto. Any way for outputting the specific subset of the first data can be applied in the present invention.

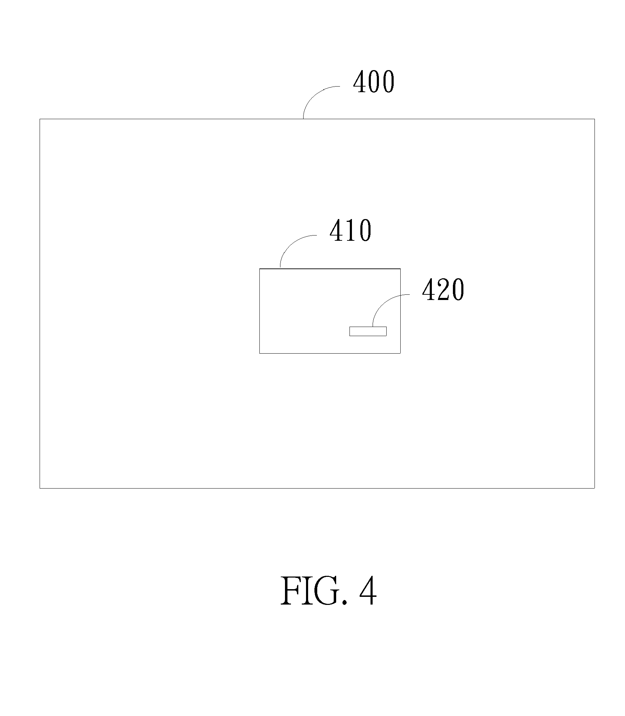

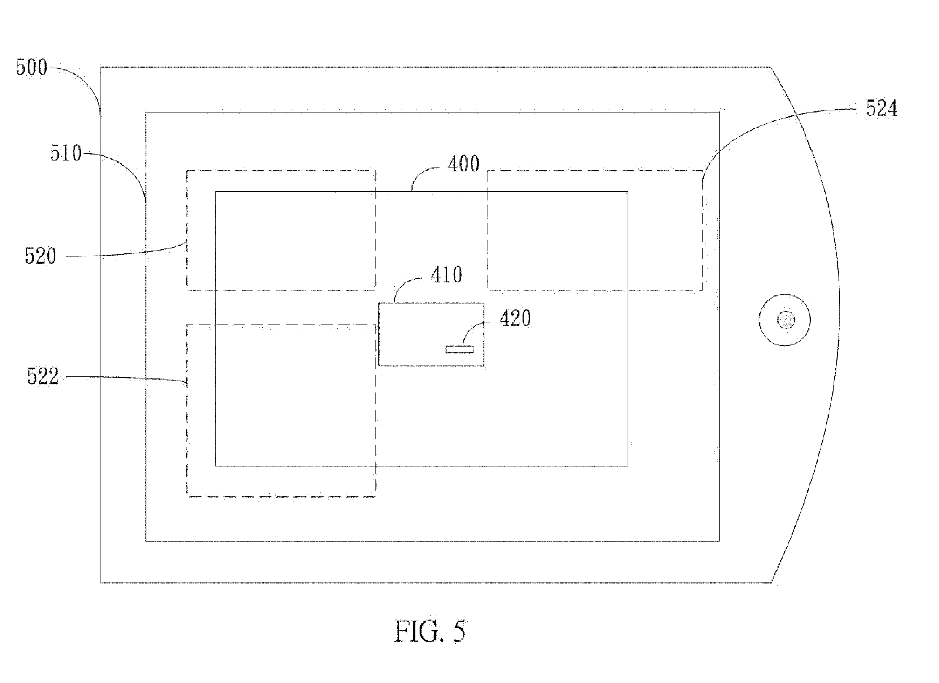

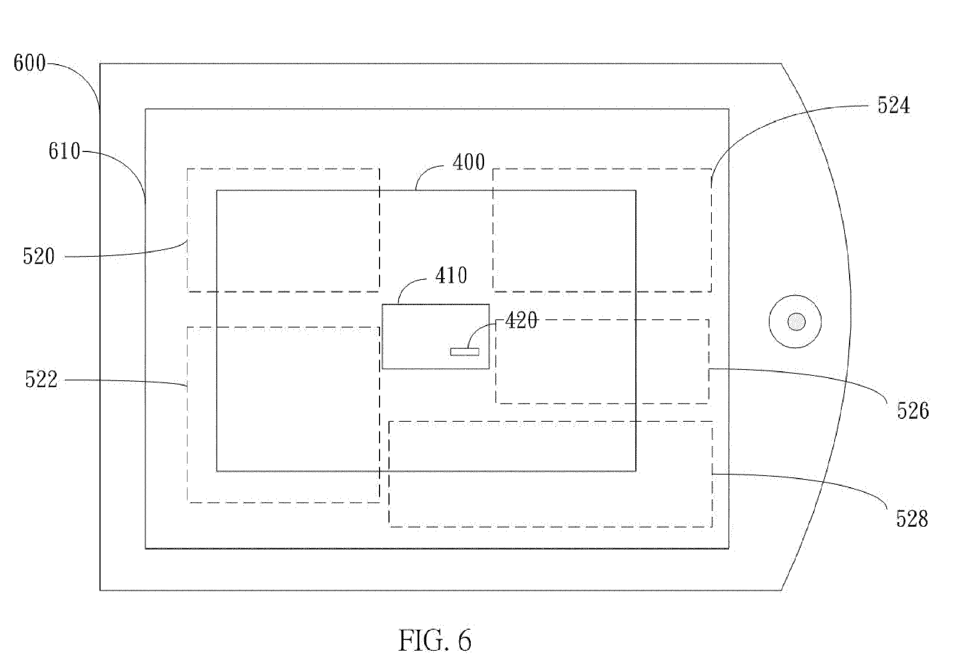

For example, Fig. 4 shows a business card 410 on a table 400. In the example, the business card 410 has first ID 420, such as a name, a phone number, an email address, a specific identification, or a combination thereof. The owner of the business card 410 can present the business card 410 to a client at a specific occasion. It is noted that, the client can input his identity data (second ID) to an electronic device, such as a phone in advance. The client can use an image capture unit of the phone 500 to capture an image of the business card 410, and the image is displayed in a display unit 510 of the phone 500. At this time, the phone can automatically recognize and obtain the first ID 420 from the business card 410, and transmit the first ID 420 and the second ID in the phone 500 to the management center via a network. The management center can determine a specific subset of the data corresponding to the first ID 420 according to the information distribution authority for the second ID corresponding to the first ID 420, and transmit the specific subset of the data to the phone 500 of the client. In the example, the information distribution authority for the second ID corresponding to the first ID is level 1. The phone 500 of the client can display the specific subset via the display unit 510 by using the AR technology, as shown in Fig. 5. As shown in Fig. 5, the specific subset of data comprises data in area 520, 522 and 524. For example, the data in area 520, 522 and 524 may correspond to basic contact information, educational background data, and experience data of an owner of the business card 410. On the other hand, a friend, such as classmate of the owner of the business card 410 can use an image capture unit of the phone 600 to capture an image of the business card 410, and the image is displayed in a display unit 610 of the phone 600. At this time, the phone can automatically recognize and obtain the first ID 420 from the business card 410, and transmit the first ID 420 and the third ID in the phone 600 to the management center via a network. The management center can determine a specific subset of the data corresponding to the first ID 420 according to the information distribution authority for the third ID corresponding to the first ID 420, and transmit the specific subset of the data to the phone 600 of the friend. In the example, the information distribution authority for the third ID corresponding to the first ID is level 2. The phone 500 of the friend can display the specific subset via the display unit 610 by using the AR technology, as shown in Fig. 6. As shown in Fig. 6, the specific subset of data comprises data in area 520, 522, 524, 526 and 528. For example, the data in area 520, 522, 524, 526 and 528 may correspond to basic contact information, educational background data, experience data, photos, and undertakings of the owner of the business card 410.

In an example of business operation, the distributed specific subset of data can be dynamically adjusted. It is assumed that the business card 410 in Fig. 4 corresponds to a restaurant. A user can use the image capture unit of the phone 500 to capture an image of the business card 410, and the image is displayed in the display unit 510 of the phone 500. The phone can automatically recognize and obtain the first ID 420 from the business card 410, and transmit the first ID 420 and the second ID in the phone 500 to the management center via a network. The management center can determine a specific subset of the data corresponding to the first ID 420 according to the information distribution authority for the second ID corresponding to the first ID 420, and transmit the specific subset of the data to the phone 500 of the user. In the example, the phone 500 of the user can display the specific subset via the display unit 510 by using the AR technology, as shown in Fig. 5. As shown in Fig. 5, the specific subset of data comprises data in area 520, 522 and 524. For example, the data in area 520, 522 and 524 may correspond to contact information of the restaurant, popular dishes of the restaurant, and promotions of the week. As described, the distributed specific subset of data can be dynamically adjusted. In the example, the data in area 522 and 524 can be dynamically adjusted; for example, the data can be changed every week. It is understood that, in some embodiments, the management center can provide an input interface, which can be used to help a business entity to design various data areas, and edit data in the respective data areas.

Additionally, in some embodiments, in addition to first ID obtained from a data carrier and second ID corresponding to a user in the electronic device, the management center can further obtain additional data according to the second ID corresponding to the user, and determine the specific subset of data to be distributed to the electronic device according to the first ID, the second ID, and the additional data corresponding to the second ID. For example, the additional data may be gender information.

A user can use an electronic device to obtain identity data from a business card of a clothing store, and transmit the identity data of the clothing store and the identity data of the user to the management center. The management center can obtain gender information (additional data) according to the identity data of the user, and determine a specific subset of the data corresponding to the clothing store according to the identity data of the clothing store, the identity data of the user, and the gender information of the user, in which the determined specific subset of data is distributed to the user. For example, when the user is female, the clothing store can distribute promotion information relevant to females. On the other hand, when the user is male, the clothing store can distribute promotion information relevant to males. It is understood that, above gender information is an example of the application. Any information which can be additionally obtained according to the identity data of the user can be applied in the present invention.

As described, the information distribution authority between entities can be managed, for example adjusted or modified.

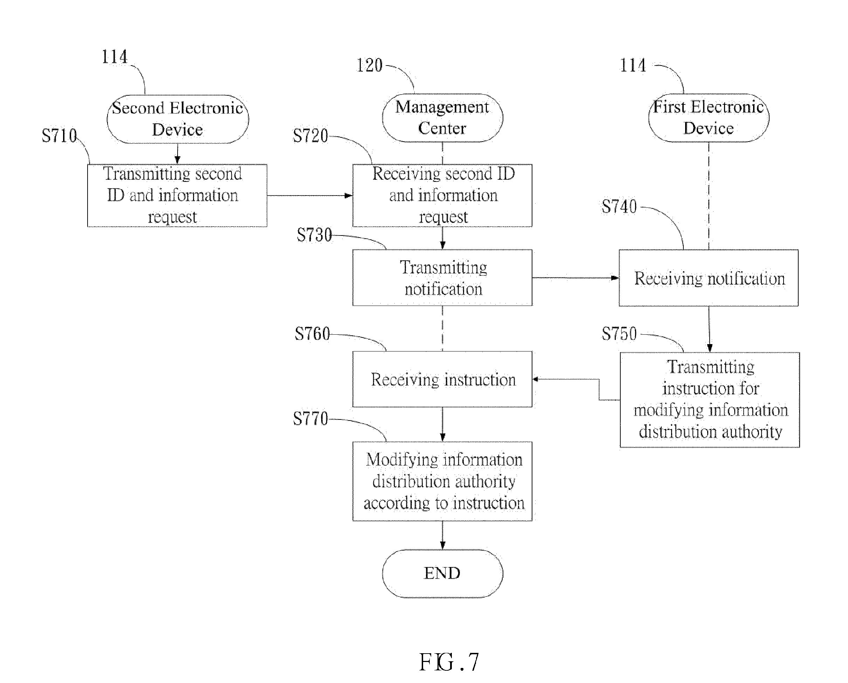

Fig. 7 is a flowchart of an embodiment of a management method for information distribution of the invention. In the embodiment, an entity can make a request to another entity for information. An entity is requested to modify the information distribution authority for another entity. In step S710, the second electronic device 114 transmits the second ID and an information request for the first ID to the management canter 120 via the network. In step S720, the management center 120 receives the information request of the second ID, and in step S730, notifies the information request of the second ID to an entity corresponding to the first ID. It is noted that, the notification can be transmitted to the first electronic device 112 owned by the entity. In other words, in step S740, the entity can use the first electronic device 112 to connect with the management center 120 to obtain the notification. It is noted that, the entity can determine whether to agree to the request corresponding to the second ID. If the entity agrees, in step S750, the entity transmits an instruction for modifying the information distribution authority for the second ID corresponding to the first ID to the management center 120. In step S760, the management center 120 receives the instruction from the first electronic device 112, and in step S770, modifies the information distribution authority for the second ID corresponding to the first ID according to instruction.

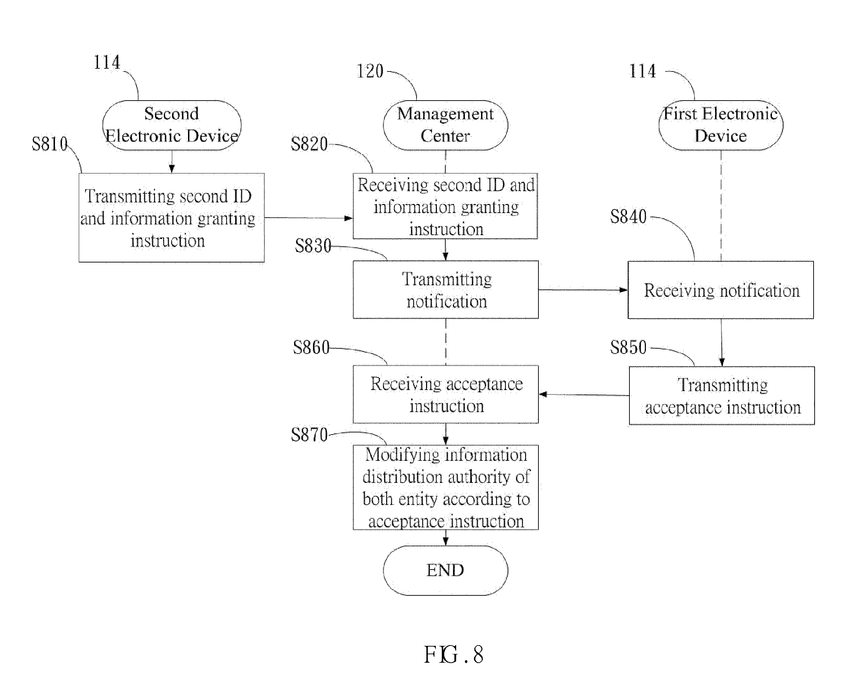

Fig. 8 is a flowchart of another embodiment of a management method for information distribution of the invention. In the embodiment, the level of the information distribution authority between the entities can be exchanged. That is, the information distribution authorities of respective entities can be requested to be modified. In step S810, the second electronic device 114 transmits the second ID and an information granting instruction for the first ID to the management canter 120 via the network. In step S820, the management center 120 receives the information granting instruction for the first ID, which is generated by the second ID, and in step S830, notifies the information granting instruction of the second ID to an entity corresponding to the first ID. Similarly, the notification can be transmitted to the first electronic device 112 owned by the entity. In other words, in step S840, the entity can use the first electronic device 112 to connect with the management center 120 to obtain the notification. Similarly, the entity can determine whether to agree to the instruction corresponding to the second ID. If the entity agrees, in step S850, the entity transmits an acceptance instruction to the management center 120. In step S860, the management center 120 receives the acceptance instruction from the first electronic device 112, and in step S870, modifies the information distribution authority for the second ID corresponding to the first ID and the information distribution authority for the first ID corresponding to the second ID according to the acceptance instructions.

It is understood that, in some embodiments, the management for information distribution can have a third-party distribution function. Data between the entities corresponding to the first ID and the second ID can be distributed to an entity corresponding to third ID. For example, an entity corresponding to the third ID can receive the specific subset of the first Data corresponding to the first ID from the management center via the network by way of an entity corresponding to the second ID. It is noted that, in some embodiments, the distributed specific subset of data may be a friend list or a member list corresponding to an entity. For example, the distributed specific subset of data may be friends of a user or members of a club. In such a case, a member of a specific club can use an electronic device to obtain identity data of the specific club from a data carrier, and transmit the identity data of the specific club and the identity of the member to the management center. The management center can transmit a specific subset of data corresponding to the specific club to the member according to the identity data of the specific club and the identity of the member. The specific subset of data can comprise a member list of the specific club. In other words, the member can discover information regarding other members of the specific club.

Therefore, the methods and systems for information distribution of the present invention can perform information distributions with different authorities for different entities, thereby improving the convenience and flexibility of information distribution.

Methods for information distribution, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

It is to be noted that although the preferred embodiment of the present invention has been described, other modifications, alterations or minor change to the structure should still be within the scope defined in the claims. As those skilled in the art will readily observe that numerous modifications and alterations of the device and method may be made while retaining the teachings of the invention.

## Claims

1. A method for information distribution for use in an electronic device (200), comprising:
obtaining first ID (identity data) (420) from a data carrier (410);
transmitting the first ID (420) and second ID to a management center (120) via a network (130), wherein the management center(120) determines a specific subset of first data corresponding to the first ID (420) according to the first ID (420) and the second ID;
receiving the specific subset of the first data from the management center (120) via the network (130); and
outputting the specific subset of the first data.

2. The method of claim 1, wherein the data carrier (410) comprise a business card (410), a publication, a screen, or any medium storing or printed with the identity data.

3. The method of claim 1 or 2, wherein the identity data comprises a sequence of numbers, a sequence of characters, a sequence of combination of numbers and characters, a name, a phone number, an email address, an email signature, a website address, an advertisement, a post, or member identification.

4. The method in any of claims 1 to 3, wherein the electronic device (200) captures an image for the data carrier (410) by using an image capture uni t(210), and obtains the first ID (420) from the image.

5. The method of claim 4, further comprising displaying the image via a display unit (510, 610), and displaying the specific subset of the first data in the image using an AR (Augmented Reality) technology.

6. The method in any of claims 1 to 3, wherein the electronic device (200) scans the data carrier by using a scanner (210), thus to obtain the first ID (420) from the data carrier (410).

7. The method in any of claims 1 to 3, wherein the electronic device (200) wirelessly detects and obtains the first ID (420) from the data carrier (410) by using a reader (210).

8. The method in any of claims 1 to 7, wherein the management center (120) retrieves an information distribution authority for the second ID corresponding to the first ID (420), and determines the specific subset of the first data corresponding to the first ID (420) according to the information distribution authority.

9. The method of claim 8, further comprising transmitting an information request for the first ID (420), which is generated by the second ID to the management canter (120) via the network (130), and notifying the information request of the second ID to an entity corresponding to the first ID (420) by the management center (120).

10. The method of claim 9, further comprising receiving an instruction for modifying the information distribution authority for the second ID corresponding to the first ID (420) according to the information request by the management center (120), in which the instruction is generated, in response to the notification, by the entity corresponding to the first ID (420).

11. The method of claim 8, further comprising transmitting an information granting instruction for the first ID (420), which is generated by the second ID to the management canter (120) via the network (130), and notifying the information granting instruction of the second ID to an entity corresponding to the first ID (420) by the management center (120).

12. The method of claim 11, further comprising receiving an acceptance instruction by the management center (120), in which the acceptance instruction is generated, in response to the notification, by the entity corresponding to the first ID (420).

13. The method in any of claims 1 to 12, further comprising obtaining additional data according to the second ID, and determining the specific subset of the first data corresponding to the first ID (420) according to the first ID (420), the second ID, and the additional data by the management center (120).

14. A system (100) for information distribution for use in an electronic device (200), comprising:
an identity data obtaining unit (210) obtaining first ID (420) from a data carrier (410);
a network connecting unit (220); and
a processing unit transmitting the first ID (420) and second ID to a management center (120) via a network (130) by using the network connecting unit (220), wherein the management center (120) determines a specific subset of first data corresponding to the first ID (420) according to the first ID (420) and the second ID, receiving the specific subset of the first data from the management center (120) via the network (130) by using the network connecting unit (220), and outputting the specific subset of the first data.

15. A machine-readable storage medium comprising a computer program, which, when executed, causes a device to perform a method for information distribution, wherein the method comprises:
obtaining first ID (420) from a data carrier (410);
transmitting the first ID (420) and second ID to a management center (120) via a network (130), wherein the management center (120) determines a specific subset of first data corresponding to the first ID (420) according to the first ID (420) and the second ID;
receiving the specific subset of the first data from the management center (120) via the network (130); and
outputting the specific subset of the first data.
